# FASCICULE DE BREVET EUROPEEN

(11) **EP 2 669 981 B1**
(45) Date de publication et mention de la délivrance du brevet: **04.05.2016**
(21) Numéro de dépôt: 13168448.2
(22) Date de dépôt: 20.05.2013
(51) Int. Cl.: H01M 8/04, H01M 8/02, H01M 8/24, H01M 8/06

(54) **GÉNÉRATEUR COMPACT DE COURANT ÉLECTRIQUE COMPORTANT UNE PILE À COMBUSTIBLE ET SOURCE D'HYDROGÈNE INTÉGRÉE**
KOMPAKTER STROMGENERATOR BEINHALTEND EINE BRENNSTOFFZELLE UND EINE INTEGRIERTE WASSERSTOFFQUELLE
COMPACT ELECTRIC CURRENT GENERATOR COMPRISING A FUEL CELL AND AN INTEGRATED HYDROGEN SOURCE

(30) Priorité: 29.05.2012 FR 1201521
(43) Date de publication de la demande: 04.12.2013
(73) Titulaire: Paxitech, 38130 Echirolles (FR)
(72) Inventeur: Mosdale, Renaut, 38640 CLAIX (FR)
(74) Mandataire: Thibon, Laurent

(56) Documents cités:
- WO-A2-2008/017793
- US-A1- 2006 030 483
- US-A1- 2008 160 383
- US-A1- 2010 151 283

## Description

### Domaine de l'invention

La présente invention concerne les piles à combustible et plus particulièrement les piles fonctionnant avec du dihydrogène.

### Exposé de l'art antérieur

Les piles à combustible permettent, à partir d'un carburant, de générer directement du courant électrique. De nombreux types de piles à combustible existent, parmi lesquels les piles fonctionnant d'une part avec du dihydrogène stocké dans un container, et d'autre part avec du dioxygène généralement apporté par l'air ambiant. Avantageusement, le stockage de l'hydrogène peut se faire sous la forme d'un hydrure métallique. La formation d'un tel hydrure implique une réaction chimique, souvent réversible, entre du métal et l'hydrogène selon l'équation : M + x/2 H₂ <-> MHx + émission de chaleur ; où M désigne les composants métalliques de l'hydrure, et H₂ le dihydrogène. L'émission de chaleur est inéluctable car, lors de la formation de l'hydrure, le dihydrogène passe d'un état gazeux à un état condensé. La réaction inverse, c'est-à-dire la génération de dihydrogène à partir d'un hydrure, est endothermique. En d'autres termes, pour extraire du dihydrogène d'un hydrure, il faut apporter des calories à cet hydrure. De façon habituelle, le container d'hydrure possède ses propres moyens de chauffage afin de pouvoir générer du dihydrogène. Il en résulte une dépense en énergie. La pile à combustible et le container d'hydrure associés forment un système peu pratique à utiliser, complexe, peu compact et coûteux à réaliser.

Un exemple de pile à combustible est décrit dans la demande de brevet US 2008/0160385.

### Résumé

Un objet de la présente invention est de prévoir une pile à combustible et, avantageusement, une source génératrice de dihydrogène de sorte à pallier tout ou partie les inconvénients des piles à combustible et des sources de dihydrogène existantes.

Un autre objet de la présente invention est de prévoir une pile à combustible, associée à une source génératrice de dihydrogène contenant un hydrure métallique, présentant un fort rendement énergétique.

Un autre objet de la présente invention est de prévoir un procédé de démarrage et de fonctionnement d'un générateur de courant électrique utilisant une pile à combustible et une source de dihydrogène obtenu à partir d'un hydrure métallique.

Ainsi, un mode de réalisation de la présente invention prévoit une pile à combustible qui comporte : un réceptacle configuré de sorte à recevoir une cartouche génératrice de dihydrogène ; un ensemble comportant au moins une cellule unitaire comportant une cathode et une anode séparées par un électrolyte, l'anode entourant au moins partiellement le réceptacle ; et des moyens pour concentrer la chaleur produite par l'ensemble vers le réceptacle, l'enveloppe externe de la pile étant configurée de sorte à réfléchir des rayonnements infrarouges, résultant du fonctionnement de la pile à combustible, en direction du réceptacle.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, est une vue en coupe d'une cellule unitaire pour pile à combustible ;
les figures 2A et 2B sont des vues en coupe transversale de cellules unitaires pour pile à combustible selon des modes de réalisation de la présente invention ;
la figure 3 est une vue en coupe longitudinale d'une pile à combustible selon un mode de réalisation de la présente invention ; et
la figure 4 est une vue en coupe longitudinale d'une cartouche génératrice de dihydrogène.

### Description détaillée

Par souci de clarté, de mêmes éléments ont été désignés par de mêmes références aux différentes figures qui ont été tracées sans respect d'échelle.

Par souci de clarté, seuls les éléments utiles à la compréhension de l'invention ont été représentés et seront décrits. En particulier l'assemblage d'une cellule unitaire pour pile à combustible et la réalisation détaillée des interconnexions électriques sur ces cellules unitaires sont connus de l'homme du métier, et ne seront pas décrits. La réalisation et l'assemblage des différents éléments mécaniques proposés ne seront pas décrits car ils sont connus de l'homme de l'art. La formulation chimique des très nombreux hydrures métalliques utilisables, et le mode de réalisation de ces hydrures font partis des connaissances de l'homme du métier. Par le terme « génération de dihydrogène à partir d'un hydrure », on comprend toute réaction physico-chimique permettant d'extraire le dihydrogène adsorbé ou absorbé dans ou sur un hydrure, nonobstant la forme physique de cet hydrure, par exemple, liquide, gazeux, solide, notamment sous forme cristalline.

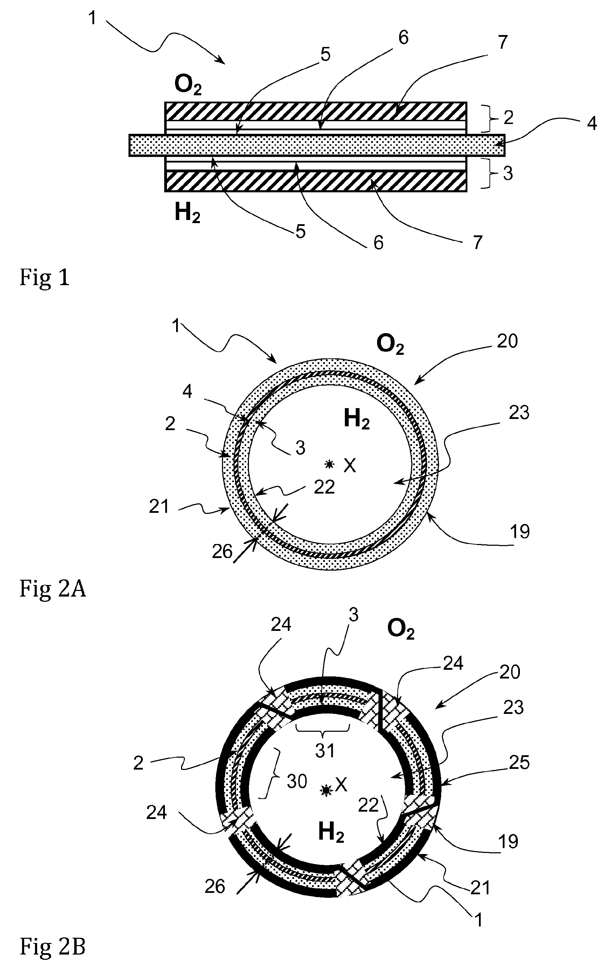

La figure 1 est une vue en coupe schématique d'une cellule unitaire 1 pour pile à combustible du type de celle utilisable pour la présente invention. La cellule unitaire 1 comporte une cathode 2 et une anode 3 séparées par un électrolyte 4. La cathode 2 et l'anode 3 sont, de manière connue, poreuses aux gaz et sont usuellement associées à des éléments catalytiques. La cathode 2 et l'anode 3 sont, par exemple, formées à partir de plusieurs couches de feutres. Par exemple, elles comportent chacune trois couches de feutres superposées. Une première couche catalytique 5, d'environ 15 µm d'épaisseur, contient du platine et du carbone. Cette première couche catalytique 5 est en contact avec l'électrolyte 4. Une deuxième couche de diffusion 6, notamment pour diffuser des gaz, par exemple d'environ 200 µm d'épaisseur, contient du carbone. Une troisième couche électriquement conductrice 7, par exemple de 100 µm d'épaisseur, peut contenir des fils métalliques. La troisième couche de feutre permet, en outre, d'assurer un contact électrique entre la cellule unitaire 1 et, par exemple, un conducteur électrique en métal, non représenté sur la figure 1. L'électrolyte 4, inséré entre la cathode 2 et l'anode 3, est constitué, par exemple, d'une membrane formant un électrolyte solide. Par exemple, une membrane souple de type NAFION®, un polymère synthétique souple, produit par la société DuPont^{™}, de 50 µm d'épaisseur, peut être utilisée. La cellule unitaire 1 ainsi constituée est souple et peut être ajustée selon une grande variété de surfaces courbes, en particulier selon des surfaces cylindriques.

Le principe de fonctionnement d'une pile à combustible, utilisant du dihydrogène et du dioxygène est connu et ne sera pas décrit en détail. Le dioxygène O₂ est amené en contact avec la cathode 2 et le dihydrogène H₂ est amené en contact avec l'anode 3. Par effet catalytique, la molécule de dihydrogène H₂ est dissociée en protons H+ et en électrons. L'électrolyte 4 est choisi de façon à ce que seuls les protons H+ puissent le traverser, les électrons restant sur l'anode 3 qui se polarise alors négativement. Les protons H+, lorsqu'ils atteignent la couche catalytique 5 de la cathode 2 se combinent avec les atomes d'oxygène présents pour former de l'eau. Cette réaction chimique d'oxydo-réduction est fortement exothermique. De façon approximative, l'énergie associée à la réaction d'oxydo-réduction entre le dihydrogène et le dioxygène se partage pour moitié en énergie électrique, récupérée sous forme de courant électrique par l'anode 3 et la cathode 2 de la cellule unitaire 1, et, pour l'autre moitié, en énergie thermique.

Les figures 2A et 2B sont des vues chacune en coupe transversale d'un cylindre creux 20, par exemple de révolution autour d'un axe commun central X. Le cylindre creux 20, entourant une partie centrale 23, comporte, au moins en partie, un ensemble 19 comportant au moins une cellule unitaire 1, par exemple du type de celle décrite en relation avec la figure 1. Le dioxygène O₂ peut, par exemple, être fourni par de l'air ambiant entourant le cylindre creux 20. Le dihydrogène H₂ est alors introduit dans la partie centrale 23 du cylindre creux 20. Il résulte de cette configuration particulière, donnée à titre d'exemple, que chaque cathode 2 se situe sur la partie externe du cylindre creux 20. Des surfaces libres, de chaque cathode 2, définissent, en partie, une surface latérale externe 21 du cylindre creux 20. Des surfaces libres de chaque anode définissent, de même, en partie, une surface latérale interne 22 du cylindre creux 20. Les surfaces latérales externes 21 et internes 22 délimitent une paroi 26 latérale du cylindre creux 20. L'électrolyte 4 est inséré entre chaque couple de cathode 2 et d'anode 3.

La figure 2A correspond à un mode de réalisation particulier selon lequel l'ensemble 19 comporte une seule cellule unitaire 1, entourant l'axe commun central X.

La figure 2B correspond à un autre mode de réalisation particulier selon lequel l'ensemble 19 comporte une pluralité de cellules unitaires 1, séparées les unes des autres par une séparation 24, par exemple en résine polymérisée. La séparation 24 assure le maintien mécanique des cellules unitaires 1. La séparation 24 participe à l'étanchéité, aux gaz, de la partie centrale 23 du cylindre creux 20, vis à vis de l'extérieur. La séparation 24 contribue à l'isolation électrique de deux cellules unitaires 1 adjacentes. Un conducteur d'électricité 25 permet l'interconnexion électrique des différentes cellules unitaires 1 entre-elles. Par exemple, il est possible de connecter en série une première cellule unitaire 30 avec une deuxième cellule unitaire 31 adjacente à la première cellule unitaire 30. Pour cela, on relie électriquement la cathode 2 de la première cellule unitaire 30 à l'anode 3 de la deuxième cellule unitaire 31, par exemple, au moyen du conducteur d'électricité 25. La cathode 2 et l'anode 3 se situant de part et d'autre de la paroi 26 du cylindre creux 20, le conducteur d'électricité 25 doit traverser la paroi 26, par exemple au niveau de la séparation 24 séparant les première 30 et deuxième 31 cellules unitaires adjacentes.

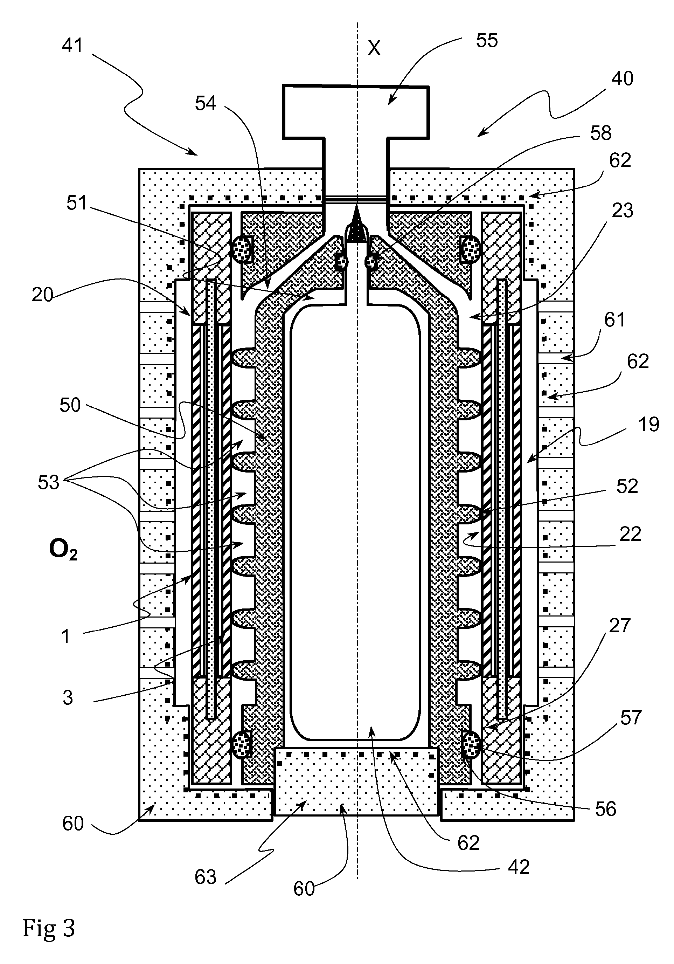

La figure 3 est une coupe longitudinale d'un générateur de courant électrique 40 selon un mode de réalisation de la présente invention. Le générateur de courant électrique 40 comporte une pile à combustible 41 et une cartouche génératrice de dihydrogène 42.

Selon un mode de réalisation, décrit à titre d'exemple en relation avec la figure 3, la pile à combustible comporte trois composants formés, en partie, par des cylindres de révolution autour de l'axe commun central X :
- l'ensemble 19, comportant au moins une cellule unitaire 1, tel que décrit précédemment en relation avec l'une des figures 2A ou 2B ;
- un diffuseur 50 pour dihydrogène ; et
- une enveloppe externe 60.

Le diffuseur 50 pour dihydrogène est, par exemple, un solide creux entourant un réceptacle 51, le réceptacle 51 étant configuré de sorte à recevoir la cartouche génératrice de dihydrogène 42. Le diffuseur 50 est situé dans la partie centrale 23 du cylindre creux 20 comportant l'ensemble 19, et est disposé entre le réceptacle 51 et l'ensemble 19. En d'autres termes, l'ensemble 19, et en particulier au moins une anode 3 d'une cellule unitaire 1 de cet ensemble 19, entoure le réceptacle 51, au moins partiellement. Le diffuseur 50 comporte une surface périphérique 52 située en regard d'au moins une partie de l'ensemble 19. De manière avantageuse le diffuseur 50 est en contact, par la surface périphérique 52, avec la surface latérale interne 22 du cylindre creux 20. De préférence, la surface périphérique 52 comporte un réseau de sillons 53 destiné à guider le dihydrogène vers l'ensemble 19, et, en particulier, à permettre l'alimentation en dihydrogène provenant de la cartouche génératrice de dihydrogène 42, de chaque anode 3 de l'ensemble 19. Le diffuseur 50 comporte une canalisation 54 destinée à relier le réseau de sillons 53 à la cartouche génératrice de dihydrogène 42 pouvant être placée dans le réceptacle 51. Un détendeur 55 peut, avantageusement, être inséré entre la canalisation 54 et la cartouche génératrice de dihydrogène 42 afin de réguler le débit et la pression de dihydrogène dans le réseau de sillons 53 du diffuseur 50. Le détendeur 55 est ainsi relié au diffuseur 50 et est configuré pour être connecté à la cartouche génératrice de dihydrogène 42. Le diffuseur 50, notamment de forme cylindrique, peut comporter, selon un pourtour de sa surface périphérique 52, des gorges 56. Les gorges 56 sont munies de joints toriques 57. Les joints toriques 57 sont en contact avec des parties réceptrices 27 disposées, par exemple, sur la surface latérale interne 22 du cylindre creux. Les parties réceptrices 27 peuvent également, par exemple, constituer une partie de la paroi 26 du cylindre creux 20. Les parties réceptrices 27 forment avantageusement un anneau entourant le cylindre creux 20. Avantageusement les parties réceptrices 27 peuvent être réalisées avec une résine polymérisée similaire à celle formant les séparations 24 décrites en relation avec la figure 2B. En partie au moyen des joints toriques 57, le réseau de sillons 53 forme un volume étanche délimité en partie par la surface interne 22 du cylindre creux 20 et par une surface externe du diffuseur 50. Le dihydrogène peut être confiné dans ce volume étanche. Un joint d'insertion 58 peut être pourvu entre la cartouche génératrice de dihydrogène 42 et le diffuseur 50 de dihydrogène. Le dihydrogène, provenant de la cartouche génératrice de dihydrogène 42, peut ainsi alimenter l'anode 3 d'une cellule unitaire 1 en parcourant le volume étanche du générateur de courant électrique 40.

De manière avantageuse, le diffuseur 50 est réalisé dans un matériau conducteur de la chaleur. Ainsi la chaleur produite par la cellule unitaire 1 est drainée vers le réceptacle 51 entouré par le diffuseur 50. Dans le cas où la surface périphérique 52 du diffuseur 50 est en contact avec, par exemple, une anode 3 de la cellule unitaire 1, il peut être nécessaire d'isoler électriquement la surface périphérique 52 du diffuseur 50 des parties électriquement conductrices de l'anode 3. Par exemple, le diffuseur 50 peut être réalisé en métal, conducteur de la chaleur et de l'électricité, le métal étant séparé de l'anode 3 par une matière électriquement isolante. Cette matière électriquement isolante peut être réalisée avec un matériau conducteur de la chaleur ou bien être suffisamment fine pour laisser passer la chaleur. Par exemple, le diffuseur 50 sera avantageusement réalisé dans un alliage d'aluminium anodisé, au moins, sur la surface périphérique 52. Cette anodisation crée, en surface, une fine couche d'alumine, électriquement isolante pouvant aisément être traversée par la chaleur provenant de l'ensemble 19. Une autre possibilité est de réaliser le diffuseur 50 en métal, conducteur de la chaleur, recouvert par un fin revêtement, par exemple une peinture, électriquement isolant. Une autre possibilité est d'insérer une fine couche électriquement isolante et conductrice de la chaleur et poreuse au dihydrogène. Dans le cas de cette dernière possibilité, par exemple, une feuille de mica percée peut être insérée entre la surface périphérique 52 du diffuseur 50 et la surface latérale interne 22 du cylindre creux 20. Une autre possibilité est de réaliser le diffuseur 50 dans un matériau cristallin isolant électriquement et conducteur de la chaleur.

La pile à combustible 41 peut comporter l'enveloppe externe 60 afin de protéger, de l'environnement externe de la pile à combustible 41, les autres composants de la pile à combustible 41. De manière avantageuse, l'enveloppe externe 60 se situe à la frontière entre l'environnement extérieur de la pile à combustible 41 et la pile à combustible 41. Notamment l'enveloppe externe 60 peut protéger la surface latérale externe 21 du cylindre creux 20 et en particulier chaque cathode 2 de l'ensemble 19. Dans un mode de réalisation proposé, l'enveloppe externe 60 peut comporter des perçages 61 permettant à l'air ambiant de parvenir à chaque cathode 2 de l'ensemble 19. L'enveloppe externe 60 peut, selon un autre mode de réalisation, être configurée de sorte à former un réservoir étanche pouvant être rempli par une source externe de dioxygène. En d'autres termes, l'enveloppe externe 60 est configurée de sorte à laisser passer le dioxygène O₂ de l'extérieur de la pile à combustible 41 vers chaque cathode 2 de l'ensemble 19. Avantageusement, l'enveloppe externe 60 peut être configurée de sorte à isoler thermiquement l'ensemble 19 vis à vis de l'environnement externe de la pile 41. Pour réaliser cette fonction, l'enveloppe externe 60 peut, par exemple, comporter des matériaux isolants thermiquement. Par exemple, l'enveloppe externe 60 peut être réalisée en résine polymérisée. Ainsi, toute la chaleur produite par la ou les cellules unitaires 1 de l'ensemble 19 restera confinée dans la pile à combustible 41. Le diffuseur 50 drainera cette chaleur vers le réceptacle 51. De manière avantageuse, la surface interne de l'enveloppe externe 60 peut être recouverte d'un matériau réfléchissant 62 le rayonnement infrarouge. La forme globalement cylindrique de la surface interne de l'enveloppe externe 60 entourant le cylindre creux 20 contribue à focaliser le rayonnement infrarouge vers le réceptacle 51. En d'autres termes, l'enveloppe externe 60 est configurée de sorte à réfléchir des rayonnements infrarouges, résultants du fonctionnement de la pile à combustible 41, en direction du réceptacle 51. L'enveloppe externe 60 isolante, le matériau réfléchissant 62 et le diffuseur 50 sont des moyens qui, utilisés séparément ou conjointement, permettent de concentrer la chaleur produite par l'ensemble 19 vers le réceptacle 51. Afin de rendre accessible le réceptacle 51, à partir de l'extérieur de la pile à combustible 41, l'enveloppe externe 60 est munie, par exemple, d'une trappe 63 en regard du réceptacle 51

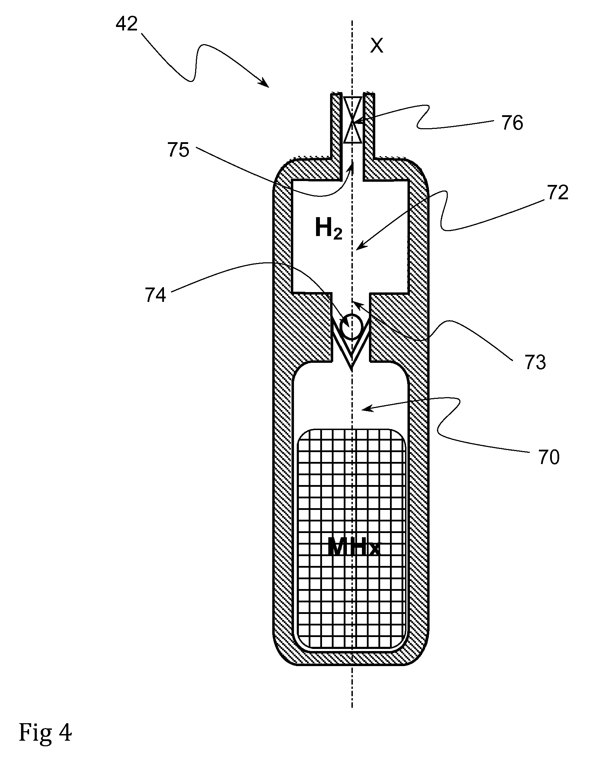

La figure 4 est une coupe longitudinale de la cartouche génératrice de dihydrogène 42 du générateur de courant électrique 40 représenté par la figure 3. La cartouche génératrice de dihydrogène 42 est destinée à coopérer avec la pile à combustible 41. La cartouche 42, réalisée de préférence en métal conducteur de la chaleur, est conformée de façon à pouvoir être introduite et maintenue dans le réceptacle 51, au moyen, par exemple, de la trappe 63. Par exemple, la cartouche 42 a la forme d'un cylindre circulaire autour d'un axe commun central X. La cartouche 42 comporte un réservoir principal 70 contenant un hydrure MHx métallique, formé, par exemple, à partir d'un alliage métallique choisi, de façon non limitative, parmi l'un au moins des alliages d'un type AB ou d'un type AB₂ ou d'un type AB₅. Ces types d'alliage sont connus de l'homme du métier et leurs descriptions ne seront pas reprises ici. Par exemple, le type AB peut-être un alliage fer-titane (FeTi), le type AB₂ peut être un alliage zircone-manganèse (ZrMn₂) et le type AB₅ peut être un alliage lanthane-nickel (LaNi₅). Le réservoir principal 70 est relié à un réservoir relai 72 pour dihydrogène par un conduit 73 pour dihydrogène. Le conduit 73 est muni d'une valve anti-retour 74. La valve anti-retour 74 permet la circulation du dihydrogène uniquement dans le sens du réservoir principal 70 vers le réservoir relai 72. Une canalisation de sortie 75 de réservoir relai, par exemple munie d'une vanne d'arrêt 76, relie le réservoir relai 72 à l'extérieur de la cartouche 42. Notamment la canalisation de sortie 75 est destinée à alimenter en dihydrogène la pile à combustible 41. La vanne d'arrêt 76 permet de garder du dihydrogène, dit résiduel, sous pression dans le réservoir relai 72, y compris dans le cas où la cartouche 42 est séparée de la pile à combustible 41. Des moyens additionnels, non représentés sur la figure 4, peuvent être prévus pour accroître les fonctionnalités de la cartouche 42. Par exemple, il peut être prévu de séparer par différents moyens de liaison le réservoir principal 70 du réservoir relai 72 afin de pouvoir recharger indépendamment le réservoir principal 70 en hydrure métallique. Avantageusement, le réservoir principal 70 peut comporter une sortie spécifique destinée à injecter, sous pression, du dihydrogène dans le réservoir principal 70 afin de former de l'hydrure selon la réaction chimique précédemment décrite.

Le générateur de courant électrique 40 comporte la cartouche 42 génératrice de dihydrogène introduite dans le réceptacle 51 de la pile à combustible 41. La cartouche 42 est isolée thermiquement de l'environnement externe du générateur de courant électrique 40 par l'enveloppe externe 60. La cartouche 42 est, de préférence, en contact avec le diffuseur 50 de dihydrogène de la pile à combustible 41 afin de permettre la conduction thermique entre le diffuseur 50 et la cartouche 42. La canalisation de sortie 75 de la cartouche 42 est reliée, de façon étanche, au réseau de sillons 53. Les moyens de contrôle de débit, par exemple la vanne d'arrêt 76 et le détendeur 55, sont dans un état qui permet l'alimentation du réseau de sillon 53 par le dihydrogène résiduel, sous pression, restant dans le réservoir relai 72. Lorsque le générateur produit du courant, au moins une partie de la chaleur dégagée par au moins une cellule unitaire 1, débitant du courant électrique, est concentrée vers le réceptacle 51, ainsi qu'il a été montré précédemment. Il en résulte un échauffement de l'hydrure MHx contenu dans le réservoir principal 70 situé dans le réceptacle 51. Cet échauffement provoque une génération du dihydrogène, sous pression, qui est transféré, à travers la valve anti-retour 74, dans le réservoir relai 72. Le dihydrogène H₂ sous pression transféré dans le réservoir relai 72 permet, à son tour, d'assurer le fonctionnement du générateur de courant électrique 40. Dans le cas où le générateur de courant électrique 40 est arrêté, il se refroidit. Le cycle de production de courant électrique pourra de nouveau être amorcé grâce au dihydrogène H₂ résiduel stocké sous pression dans le réservoir relai 72 durant le cycle précédent.

Des modes de réalisation particuliers de la présente invention ont été décrits. Diverses variantes et modifications apparaîtront à l'homme de l'art. En particulier les formes du générateur de courant électrique 40, de l'ensemble 19, du diffuseur 50 et de la cartouche 42 ont été décrites comme étant cylindriques, notamment, de préférence, selon des cylindres de révolution. Tout autre forme peut être adoptée, par exemple prismatique, à partir du moment où la cellule unitaire peut être adaptée à ces formes et où les moyens de concentration de la chaleur, selon la présente invention, vers un réceptacle peuvent être mis en place.

## Revendications

1. Pile à combustible (41) comportant :
- un réceptacle (51) configuré de sorte à recevoir une cartouche (42) génératrice de dihydrogène ;
- un ensemble (19) comportant au moins une cellule unitaire (1) comportant une cathode (2) et une anode (3) séparées par un électrolyte (4), l'anode (3) entourant au moins partiellement le réceptacle (51) ; et
- des moyens (50, 60, 62) pour concentrer la chaleur produite par l'ensemble (19) vers le réceptacle (51), la surface interne de l'enveloppe externe (60) de la pile étant recouverte d'un matériau (62) réfléchissant le rayonnement infrarouge résultant du fonctionnement de la pile à combustible (41) en direction du réceptacle (51).

2. Pile à combustible (41) selon la revendication 1, dont l'ensemble (19) forme un cylindre creux (20), ladite pile à combustible (41) comportant un diffuseur (50) pour dihydrogène, disposé entre le réceptacle (51) et l'ensemble (19), de sorte à permettre l'alimentation en dihydrogène, provenant de la cartouche (42) génératrice de dihydrogène, de chaque anode (3) de l'ensemble (19), ledit diffuseur (50) étant conducteur de la chaleur.

3. Pile à combustible (41) selon la revendication 2, dont le diffuseur (50) comporte, sur une surface périphérique (52) située en regard d'au moins une partie de l'ensemble (19), un réseau de sillons (53) destiné à guider le dihydrogène vers l'ensemble (19).

4. Pile à combustible (41) selon la revendication 3, dont le diffuseur (50) est en alliage d'aluminium anodisé sur la surface périphérique (52).

5. Pile à combustible (41) selon l'une des revendications précédentes, comportant une enveloppe externe (60) configurée de sorte à isoler thermiquement ledit ensemble (19) de l'extérieur de la pile à combustible (41).

6. Pile à combustible (41) selon la revendication 5, dont l'enveloppe externe (60) est configurée de sorte à laisser passer du dioxygène de l'extérieur de la pile à combustible (41) vers chaque cathode (2) de l'ensemble (19).

## Patentansprüche

1. Eine Brennstoffzelle (41), die folgendes aufweist:
- einen Behälter (51) konfiguriert zur Aufnahme einer Dihydrogen erzeugenden Kassette (42);
- eine Anordnung (19), die mindestens eine Einheitszelle (1) aufweist, die eine Kathode (2) und eine Anode (3) getrennt durch einen Elektrolyt (4) aufweist, wobei die Anode (3) teilweise den Behälter (51) umgibt; und
- Mittel (50, 60, 62) zur Konzentrierung der durch die Anordnung (19) erzeugten Wärme zu dem Behälter (51) hin, wobei die Innenoberfläche des Außengehäuses (60) der Zelle mit einem Material (62) abgedeckt ist, welches die Infrarotstrahlung, die sich durch den Betrieb der Brennstoffzelle (41) ergibt, zu dem Behälter (51) hin reflektiert.

2. Die Brennstoffzelle (41) nach Anspruch 1, deren Anordnung (19) einen hohlen Zylinder (20) formt, wobei die Brennstoffzelle (41) einen Dihydrogen-Difuser (50) aufweist, und zwar angeordnet zwischen dem Behälter (51) und der Anordnung (19), um die Lieferung von Dihydrogen von der Dihydrogenerzeugungskassette (42) zu jeder Anode (3) der Anordnung (19) zu ermöglichen, wobei der erwähnte Difuser (50) wärmeleitend ist.

3. Die Brennstoffzelle (41) nach Anspruch 2, wobei deren Difuser (50) auf einer Umfangsoberfläche (52) angeordnet entgegengesetzt zu mindestens einem Teil der Anordnung (19) ein Netzwerk von Nuten (53) aufweist, die dazu vorgesehen sind, das Dihydrogen zu der Anordnung (19) zu führen.

4. Die Brennstoffzelle (41) nach Anspruch 3, wobei deren Difuser (50) aus anodisierter Aluminiumlegierung an der Umfangsoberfläche (52) hergestellt ist.

5. Die Brennstoffzelle (41) nach einem der vorhergehenden Ansprüche, wobei ein Außengehäuse (60) vorgesehen ist, konfiguriert zur thermischen Isolierung der Anordnung (19) gegenüber der Außenseite der Brennstoffzelle (41).

6. Die Brennstoffzelle (41) nach Anspruch 5, wobei deren Außengehäuse (60) konfiguriert ist, um Sauerstoff von der Außenseite der Brennstoffzelle (41) zu jeder Kathode (12) der Anordnung (19) hin passieren zu lassen.

## Claims

1. A fuel cell (41) comprising:
- a container (51) configured to receive a dihydrogen generation cartridge (42);
- an assembly (19) comprising at least one unit cell (1) comprising a cathode(2) and an anode (3) separated by an electrolyte (4), the anode (3) at least partially surrounding the container (51); and
- means (50, 60, 62) for concentrating the heat generated by the assembly (19) towards the container (51), the internal surface of the outer casing (60) of the cell being covered with a material (62) reflecting the infrared radiation resulting from the operation of the fuel cell (41) towards the container (51).

2. The fuel cell (41) of claim 1, having its assembly (19) forming a hollow cylinder (20), said fuel cell (41) comprising a dihydrogen diffuser (50), arranged between the container (51) and the assembly (19) to enable to supply dihydrogen, from the dihydrogen generation cartridge (42), to each anode (3) of the assembly (19), said diffuser (50) being heat-conductive.

3. The fuel cell (41) of claim 2, having its diffuser (50) comprising, on a peripheral surface (52) located opposite at least a portion of the assembly (19), a network of grooves (53) intended to guide the dihydrogen towards the assembly (19).

4. The fuel cell (41) of claim 3, having its diffuser (50) made of anodized aluminum alloy on the peripheral surface (52).

5. The fuel cell (41) of any of the foregoing claims, comprising an outer casing (60) configured to thermally isolate said assembly (19) from the outside of the fuel cell (41).

6. The fuel cell (41) of claim 5, having its outer casing (60) configured to let oxygen pass from the outside of the fuel cell (41) towards each cathode (2) of the assembly (19).
